# EUROPEAN PATENT APPLICATION

(11) **EP 2 413 111 A1**
(43) Date of publication of application: **01.02.2012**
(21) Application number: 10755829.8
(22) Date of filing: 05.03.2010
(51) Int. Cl.: G01F 23/38

(54) **LIQUID LEVEL DETECTION DEVICE**

(30) Priority: 27.03.2009 JP 2009079238
(71) Applicant: Nippon Seiki Co., Ltd., Niigata 940-8580 (JP)
(72) Inventor: ICHISAWA, Hisahito, Niigata (JP); YAMAURA, Takayuki, Niigata (JP); KOIDE, Shigeki, Niigata (JP)
(74) Representative: Jackson, Richard Eric
(86) International application number: PCT/JP2010/053601
(87) International publication number: WO 2010/110028

(57) **Abstract**

A liquid level detection device which protects at least a detection element, uses a less number of parts, can be easily assembled, and has reduced cost. A liquid level detection device (1) comprising: a float arm (2) which is provided with a float (2a) operating by following the displacement of a liquid level; a magnet (4) displaced as the float arm (2) operates; and a detection element (5) for detecting a change in the magnetism of the magnet (4). The liquid level detection device (1) also comprises; a first case body (8) consisting or a resin and covering the detection element (5); and a second case body (9) consisting of a resin and covering the first case body (8).

## Description

### Technical Field

The present invention relates to a liquid level detection device configured to detect liquid measure of various types of liquid in a tank.

### Background Art

In the related art, as a liquid level detection device configured to detect a liquid level of fuel or the like in a fuel tank such as vehicle for example, there is proposed a liquid level detection device including a float arm provided at one end thereof with a float configured to move in the vertical direction by following the liquid level, a magnet configured to be displaced in association with the movement of the float arm, a housing configured to rotatably support the other end of the float arm, a detection element such as a magnetoelectric device provided in the housing and configured to detect a change of magnetism of the magnet, a circuit board holding the detection element, a filler configured to protect the circuit board, a magnetic shield member provided so as to surround the circuit board and the magnet, and a sealing member such as an O-ring configured to prevent entry of the fuel into a space defined by the magnetic shield member and the housing for accommodating the detection element and the circuit board (for example, see Patent Document 1).

### Citation List

### Patent Document

Patent Document 1: JP-A-2007-322222

### Summary of Invention

### Technical Problem

Incidentally, the liquid level detection device described above has problems in having a large number of components, being poor in assemblability and, in addition, costing a lot. In particular, the filler and the sealing member are required in order to protect the detection element from coming into contact with the fuel or the like.

In view of the problems described above, it is an object of the present invention to provide a liquid level detection device which is capable of protecting detection elements, includes a small number of components, has good assembleability, and is capable of achieving cost reduction.

### Solution to Problem

In the present invention, in a liquid level detection device including a float arm having a float configured to move by following displacement of a liquid level, a magnet configured to be displaced in association with the movement of the float arm, and a detection element configured to detect a change of magnetism of the magnet, a first case body formed of a resin that covers the detection element, an a second case body formed of a resin covering the first case body.

Also, the first case body is formed by insert molding.

Also, the second case body is formed by insert molding.

Also, expansion coefficients of the first case body and the second case body are closely analogous.

Also, a shield case configured to accommodate the first case body and to be covered with the second case body is provided.

### Advantages of the Invention

The liquid level detection device according to the present invention is capable of providing a liquid level detection device which is capable of protecting detection elements, includes a small number of components, has good assembleability, and is capable of achieving cost reduction.

### Brief Description of the Drawings

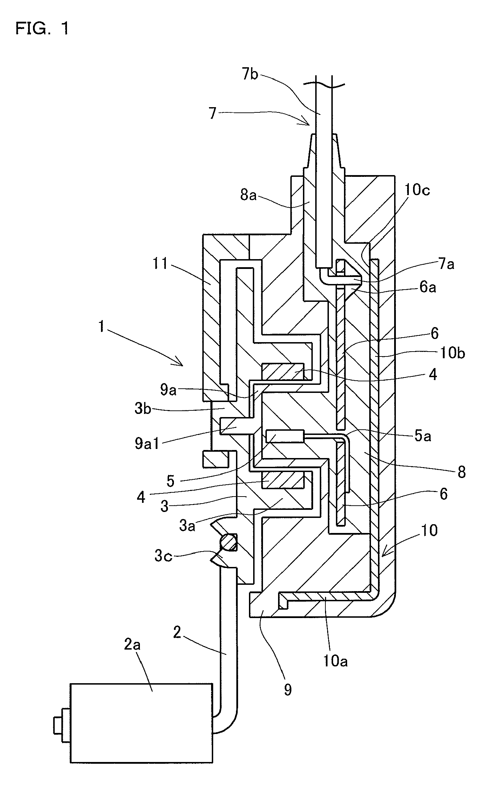

[Fig. 1] Fig. 1 is a cross-sectional view of a liquid level detection device according to a first embodiment of the present invention.

### Description of Embodiment

Referring now to Fig. 1, a first embodiment of the present invention will be described.

A liquid level detection device 1 according to the present invention includes a float arm 2, an arm holder 3, a magnet 4, a detection element 5, a circuit board 6, a lead portion 7, a first case body 8, a second case body 9, a shield case 10, and a frame cover 11.

The float arm 2 includes a float 2a configured to move by following displacement of a liquid level. The float arm 2 is formed of metal of non-magnetic body, holds the float 2a at one end thereof, and is attached to the arm holder 3 at the other end thereof.

In the embodiment, the float 2a is formed of a corrosion-inhibiting metallic material such as stainless. The material of the float 2a is not limited to this embodiment, and may be formed of synthetic resin or the like.

The arm holder 3 is formed of synthetic resin material and holds the float arm 2 and the magnet 4.

The arm holder 3 holds the float arm 2 by an arm holding portion 3c. The arm holder 3 includes a cylindrical portion 3a and includes the magnet 4 inside the cylindrical portion 3a.

The arm holder 3 is provided with a column-shaped portion 3b at the center thereof, and the column-shaped portion 3b has a function as a bearing which rotatably supports a supporting shaft portion, described later, of the second case body 9, and the arm holder 3 is rotatably supported by the second case body 9.

The frame cover 11 is disposed on the left side of the arm holder 3 in Fig. 1, and is fixed to the second case body 9. The frame cover 11 supports the arm holder 3 so as not to be disconnected, and serves a function as a bearing member which axially supports the column-shaped portion 3b of the arm holder 3.

The magnet 4 rotates (is displaced) with the arm holder 3 in association with the movement of the float 2a. The magnet 4 has an annular shape and is magnetized into two poles, is arranged so as to face the outer periphery of a column portion, described later, of the second case body 9, and is arranged in the vicinity of the detection element 5. The magnet 4 is integrally formed by means of insert molding or the like simultaneously with the molding of the arm holder 3.

The detection element 5 is formed of a magnetoelectric device such as a Hall element or the like, for example, and detects a change of magnetism in association with the rotation of the magnet 4 and outputs a detection signal. A detection element such as an MR element, for example, may be used as the detection element 5. The detection element 5 is mechanically fixed to the circuit board 6 by a lead 5a and is electrically connected thereto.

The circuit board 6 is formed of a hard substrate such as glass epoxy resin. The circuit board 6 is configured to hold the detection element 5 and the lead portion 7. Also, it electrically connects the detection element 5 and an energization terminal 6. Also, an electronic component, not shown, is packaged on the circuit board 6.

The lead portion 7 includes a conductive member 7a having a good electrical conductivity such as copper, and an insulating coat 7b configured to cover the conductive member 7a. The conductive member 7a of the lead portion 7 is electrically connected by the circuit board 6 and a solder 6a, and in this embodiment, the lead portion 7 is electrically connected to the detection element 5 via the circuit board 6.

The first case body 8 is formed of a synthetic resin, for example, a polyester-based synthetic resin, and covers parts of the detection element 5, the circuit board 6, and the lead portion 7. The parts of the detection element 5, the circuit board 6 and the lead portion 7 are covered with the first case body 8 formed by insert molding.

The second case body 9 is formed of synthetic resin, for example, of PBT (polybutylene terephthalate) or POM (polyacetal resin), and covers the first case body 8 and the shield case 10. In this embodiment, the second case body 9 does not cover the entire part of the first case body 8, and part of a coated portion 8a which covers the periphery of the lead portion 7 of the first case body 8 is exposed from the second case body 9. The second case body 9 is formed by insert molding.

The second case body 9 is provided with a column-shaped portion 9a. The column-shaped portion 9a includes a supporting shaft portion 9a1 that rotatably supports the arm holder 3.

Thermal expansion coefficients of the first case body 8 and the second case body 9 are closely analogous, which prevents separation due to the temperature change.

The shield case 10 is formed, for example, of iron nickel, and has a cup shape having a cylindrical portion 10a and a bottom portion 10b. Part of the cylindrical portion 10a is provided with a notched portion 10c for drawing the lead portion 7 and the first case body 8 which cover the lead portion 7 out of the shield case 10.
The shield case 10 is covered with the second case body 9 in a state in which the first case body 8 is accommodated in a depression defined by the cylindrical portion 10a and the bottom portion 10b. The shield case 10 is formed so as to surround the magnet 4, the detection element 5 and the circuit board 6. With the shield case 10, the influence of magnetism from the outside of the liquid level detection device 1 can be blocked, and hence a detection output with high degree of reliability and high degree of accuracy is obtained.

By covering the detection element 5 with the first case body 8, and covering the first case body 8 with the second case body 9 as described above, the filler and the process of filling the filler can be eliminated, so that the number of components can be reduced. Also, the assemblability can also be improved. Accordingly, the liquid level detection device 1 which achieves the cost reduction can be provided.

Also, by covering the first case body 8 with the second case body 9, the second case body 9 compresses the first case body 8 by the contraction after molding and, specifically, part of the first case body 8 covering the periphery of the lead portion 7 is compressed by the second case body 9, so that entry of the fuel from between the first case body 8 and the lead portion 7 is prevented, whereby the liquid level detection device having an improved sealing property between the lead portion 7 and the first case body 8 is provided at low cost.

Also, by providing the shield case 10 configured to accommodate the first case body 8 and to be covered with the second case body 9, an operation to mount the shield case 10 can be eliminated, so that the improved assemblability is achieved. Also, by covering the shield case 10 with the second case body 9, for example, deformation of the shield case 10 due to hitting of the liquid level detection device 1 against a fuel tank or the like at the time of assembly can be prevented. By preventing the deformation of the shield case 10, the change of magnetic characteristics can be prevented. In addition, corrosion of the shield case 10 can be prevented. It is specifically effective when the fuel is alcohol or the like.

For reference sake, although the lead portion 7 is electrically connected to the detection element 5 via the circuit board 6, the invention is not limited to this embodiment, and the lead portion 7 and the detection element 5 can be electrically connected directly.

### Industrial Applicability

The present invention is applicable to a liquid level detection device configured to detect liquid measure of various types of liquid in a tank.

### Reference Numerals

- 1: liquid level detection device
- 2: float arm
- 2a: float
- 4: magnet
- 5: detection element
- 7: lead portion
- 8: first case body
- 8a: coated portion
- 9: second case body
- 10: shield case

## Claims

1. A liquid level detection device comprising: a float arm having a float configured to move by following displacement of a liquid level; a magnet configured to be displaced in association with the movement of the float arm; and a detection element configured to detect a change of magnetism of the magnet, **characterized in that** a first case body formed of resin that covers the detection element, and a second case body formed of a resin covering the first case body are provided.

2. The liquid level detection device according to Claim 1, **characterized in that** the first case body is formed by insert molding.

3. The liquid level detection device according to Claim 1, **characterized in that** the second case body is formed by insert molding.

4. The liquid level detection device according to Claim 1, **characterized in that** expansion coefficients of the first case body and the second case body are closely analogous.

5. The liquid level detection device according to Claim 1, comprising a shield case configured to accommodate the first case body and to be covered with the second case body.

6. The liquid level detection device according to Claim 1, comprising a lead portion electrically connected to the detection element, and a covering portion configured to cover the lead portion on the first case body, **characterized in that** the covering portion is covered with the second case body.
